# EUROPEAN PATENT SPECIFICATION

(11) **EP 3 050 978 B1**
(45) Date of publication and mention of the grant of the patent: **02.09.2020**
(21) Application number: 15153255.3
(22) Date of filing: 30.01.2015
(51) Int. Cl.: C22C 38/02, C22C 38/04, C22C 38/12, C22C 38/18, C22C 38/34, C21D 1/25, C21D 8/06, F16L 11/08

(54) **FLEXIBLE TUBULAR STRUCTURE WITH STEEL ELEMENT**
FLEXIBLE ROHRFÖRMIGE STRUKTUR MIT STAHLELEMENT
STRUCTURE TUBULAIRE FLEXIBLE AVEC ÉLÉMENT D'ACIER

(43) Date of publication of application: 03.08.2016
(73) Proprietor: Technip France, 92400 Courbevoie (FR)
(72) Inventor: Masse, Thomas, 76230 Bois-Guillaume (FR); Gabet, Christelle, 76480 Roumare (FR); Taravel-Condat, Carol, 76490 Caudebec-en-Caux (FR)
(74) Representative: Fédit-Loriot

(56) References cited:
- EP-A1- 0 375 784
- WO-A1-01/44531
- US-A- 5 922 149
- US-A- 6 153 024
- US-B1- 6 291 079

## Description

The present invention relates to a flexible tubular structure for oil exploitation comprising at least one metallic reinforcing layer comprising a least one high tensile elongated steel element, in particular a high tensile steel wire intended for transporting hydrocarbons and especially for exploiting bearings.

In the case where these products are used in the presence of acid gas, basically H₂S and CO₂, in addition to generalized corrosion, problems can arise that are connected with the penetration of hydrogen into the steel.

Actually, sulfurated product such as e.g. pure H₂S gas is a substance that inhibits the recombination of hydrogen atoms that are produced by reduction of protons at the surface of the steel. These hydrogen atoms are introduced inside the metal of the steel wire, thus giving rise to two types of deterioration:
- "Hydrogen-Induced Cracking" or HIC according to the NACE standards. This phenomenon is related to the generation of bubbles under the surface of steel ("hydrogen blistering", we then speak of "blisters"), or to internal cracking (called stepwise cracking), due to the recombination of the hydrogen atoms inside the steel wire. This degradation can appear in the absence of stress and can be aggravated in the presence of residual stress.
- "Sulphide Stress Cracking" or SSC according to the NACE standards. This phenomenon differs from HIC in that SSC manifests itself when an external load is applied to the steel in presence of H₂S gas environment. The hydrogen atoms are diffused inside the steel wire and then are precipitated and trapped within local defects such as e.g. segregations, inclusions, grain boundaries, etc. Applying a stress on the steel wire may then result in embrittlement and delayed ruptures.

Also, in case where such flexible tubular structures are placed in very deep water, more and more they need to have very high mechanical performance levels in terms of resistance to internal pressure, to axial load, and to external pressure resulting from the great depth of immersion.

One field of application envisaged is notably the transport of crude oil, water, gas or other processed production and drilling fluids, for onshore, offshore and subsea oil exploitation.

The term "flexible tubular structure" denotes both onshore, offshore and subsea flexible pipes and umbilicals used for oil or gas exploitation.

Offshore flexible pipes serve essentially for transporting the oil or gas extracted from an offshore deposit. They may also be used for transporting pressurized seawater intended to be injected into the deposit in order to increase the production service life of hydrocarbons.

These flexible pipes are formed from an assembly of different layers, each intended to allow the pipe to withstand the offshore service or installation stresses. These layers notably comprise polymer sheaths and reinforcing layers are formed by windings of shaped metal wires, of strips or of wires of composite material.

Flexible tubular pipes generally comprise, from the inside to the outside, at least one internal barrier layer intended to convey the fluid being transported, reinforcing layers around the internal barrier layer, and an external protective sheath around the reinforcing layers. The internal barrier layer generally consists of a polymer material and it is designated either as "internal barrier layer" or as "pressure sheath".

In an embodiment, the flexible pipe is an "Integrated Production Bundle" (IPB), comprising at least one tube or hose for transporting fluids, and an electrical power and/or optical cables assembly intended to transport electric or hydraulic power or a signal between the subsea and the sea surface. Also, electrical power transport cables are intended to produce heat. The hoses or cables are placed within an external annular space, outside the external protective layer.

These flexible pipes are described in the standards documents published by the American Petroleum Institute (API), API 17J "Specification for Unbonded Flexible Pipe" and API RP 17B "Recommended Practice for Flexible Pipe".

The onshore flexible pipes to which the present invention relates are mainly those used for well drilling and control, notably the choke lines and kill lines described in the standard API 16C "Choke and Kill Systems" published by the American Petroleum Institute. These safety pipes, which are connected to the devices for wellhead sealing and control, must be able to withstand extreme conditions of pressure and temperature, typically 1000 bar and 130°C. They generally have similar structure to that the offshore flexible pipes.

The invention also relates to the onshore flexible pipes described in the standard API RP 15S "Qualification of Spoolable Reinforced Plastic Line Pipe" published by the American Petroleum Institute. These onshore flexible pipes are known by a person skilled in the art by the English name "Reinforced Thermoplastic Pipe". They are used for transporting oil and gas under pressure, typically up to 150 bar. Their structure is similar to that the offshore flexible pipes.

Subsea umbilicals mainly serve for transporting fluids power and signals from an offshore platform or a sea vessel to offshore equipment, such as valves, wellheads, collectors, pumps or separators, remotely operated vehicles (ROV), for the purpose of supplying power and for remote monitoring and control of the actuators of this equipment. The fluids transported for these applications are generally oils for hydraulic operation. The subsea umbilicals may also serve for transporting various fluids intended to be injected into a main pipeline for transporting a hydrocarbon, with a view to facilitating the flow of said hydrocarbon, for example by injecting chemicals with the aim of preventing the formation of plugs of hydrates, or methane facilitating bringing the oil to the surface ("gas lift method"), or for providing maintenance of said main pipeline, for example by injecting corrosion inhibitors.

A subsea umbilical consists of an assembly of one or more watertight pipes or hoses, and optionally electric cables and/or optical-fiber cables, said assembly being produced by helicoidal or S/Z winding of said tubes and cables, in such a way that the umbilical is flexible, and the assembly may be surrounded by reinforcing layers and an outer protective polymer sheath. These watertight pipes, which have the function of transporting the aforementioned fluids, generally have a diameter much smaller than the outside diameter of the umbilical. A watertight pipe of an umbilical generally consists of either a simple nonoxidizing metal tube, or a reinforced flexible pipe comprising an impervious polymer tube surrounded by one or more reinforcing layers.

Subsea umbilicals of this kind are described in standard API 17E "Specification for Subsea Umbilicals" published by the American Petroleum Institute, as well as in standard ISO 13628-5.

For applications at great depths, it is necessary for the at least one metallic reinforcing layer or metal reinforcement layer or tensile armor layer, responsible for taking up the longitudinal forces, to have high mechanical properties, otherwise the structure, burdened by its great length, would prove to be difficult to install and would require a floating production facility overly sized in comparison with the conventional facilities, thereby entailing very high overcosts.

Now, in general, when these reinforcements are made of steel, carbon steel or low-alloy steel, the increase in mechanical properties is to detriment of the corrosion resistance, thereby making it difficult to develop a flexible pipe intended to operate at very great depth, 3000 m and greater, while being able to withstand highly corrosive hydrocarbons. The intended corrosive hydrocarbons are in particular polyphase hydrocarbons having a high H₂S partial pressure, typically 0.5 bar to 5 bar, and/or a high CO₂ partial pressure, typically at least 5 bar. Such fluids are generally very acid, their pH typically being less than 4.5. Furthermore, their temperature may exceed 90°C.

### Background Art

US patent No.5922149 discloses a method for making steel wires and shaped wires used for enforcement of flexible tube transporting corrosive media such as hydrocarbons comprising H₂S. A shaped wire is produced by rolling or drawing steel consisting of 0.05-0.8% C, 0.4-1.5% Mn, 0-2.5% Cr, 0.1-0.6% Si, 0-1% Mo, no more than 0.25% Ni, and no more than 0.02% S and P, and a first heat treatment is performed on the shaped wire, including at least one step of quenching under predetermined conditions to achieve an HRC hardness of at least 32, a predominately tempered martensitic and tempered bainitic steel structure. The quenching step comprises passing said steel wire through an austenitizing furnace at a temperature that is greater than point Ac3 of the steel.

The pressure vault and the tensile armor wires are then made of a quench and tempered low-alloy carbon steel, giving the pipe better corrosion resistance than carbon steels that are work-hardened and softened. However, as a result their mechanical properties are not any higher, the ultimate tensile strength Rm being less than 900 MPa, which is not enough to solve the problem of the applications at very great depth. Documents US 6 153 024 A and EP 0 375 784 A1 disclose steel wires which mechanical properties are insufficient.

Therefore, one problem that arises, which the present invention aims to solve, is how to provide a flexible tubular structure in which the tensile wires not only have a high tensile strength but also a high corrosion resistance.

### Disclosure of Invention

It is an object of the present invention to provide a flexible tubular structure comprising at least one metallic reinforcing layer which comprises a least one elongated steel element, e.g. in a form of a steel wire or wire rod, with a high to extremely high tensile strength and acceptable ductility.

The present invention describes a flexible tubular structure comprising at least one reinforcing layer comprising at least one elongated steel element having very high tensile strength and ductility thanks to the oriented martensitic microstructure. In the content of the present application, "elongated steel element" mainly refers to steel wire including shaped wire and profiled wire, and any steel members having an elongated shape.

According to the present invention, there is provided a flexible tubular structure according to claim 1.

It is known that martensitic steel is a polycrystalline material. When the grains of polycrystalline material are randomly oriented, the polycrystalline material is not oriented or non-textured. Under specific conditions, the grains of polycrystalline material can be preferably oriented, and in this case the polycrystalline material is called to be "oriented", "aligned" or "textured". Two types of orientations or alignment are often confronted, i.e. "crystallographic orientation" and "microstructural orientation". Crystallographic orientation means grains are crystallographically oriented, such as with preferred alignment or orientation of certain crystallographic planes or crystallographic directions. Preferred crystallographic orientation is usually determined from an analysis of the orientation dependence of the diffraction peak intensities (such as by X-Ray Diffraction (XRD) analysis or Electron Backscatter Diffraction (EBSD)) that have been measured in different spatial directions within the coordinate system of the sample. On the other hand, if the grains of polycrystalline material have morphologically anisotropic shape, the grains can also have "microstructural orientation" by such as uniaxial compression during formation of the polycrystalline. "Microstructural orientation" implies that the anisotropic shaped grains are morphologically oriented in preferred directions or planes. This can be detected by image analysis such as scanning electron microscope (SEM). Moreover, crystallographic orientation is often linked with microstructural orientation since the shape anisotropy of grains is often related to their crystallography.

Martensite occurs as lath- or plate-shaped crystal grains. When viewed in cross section, the lenticular (lens-shaped) crystal grains are sometimes described as acicular (needle-shaped). According to the present application, in the produced martensitic steel wire, a fraction of at least 10 volume percent of martensitic grains is oriented. The term "oriented" means that the lenticular grains are either crystallographically oriented or microstructurally oriented, or oriented both crystallographically and microstructurally.

The volume percentage of the crystallographical orientation can be obtained by means of X-Ray Diffraction (XRD) analysis or Electron Backscatter Diffraction (EBSD). The volume percentage of the microstructural orientation can be evaluated by image analysis.

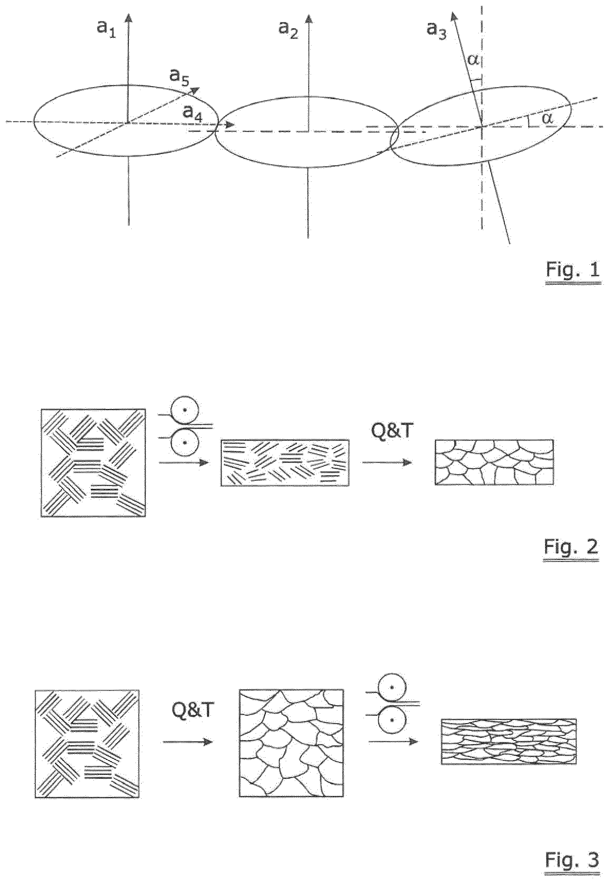

Herein, the term "oriented" does not only mean that the crystallographic axis or the axis of lenticular grains are exactly oriented at the same direction as illustrated by a₁ and a₂ in Fig. 1, but also refer to the orientation within a tolerance. When the directions of certain axes of grains (or certain crystallographic directions) are deviated, as presented by angle α in Fig. 1, within 20°, preferably within 10°, more preferably within 5°, these grains are also considered as oriented.

The orientation at least refers to one dimensional preferred orientation, e.g. in the direction perpendicular to the plane of lenticular grains (direction as shown by a₁, a₂, e.g. [001], in Fig. 1). For one dimensional orientation, the lenticular grains are randomly distributed in the directions on the lenticular plane (directions as shown by a₄, a₅, in Fig. 1). The orientation may also refer to three dimensional preferred orientation, i.e. the grains are preferably orientated in two orthogonal directions, e.g. [001] and [100].

The elongated steel element can be in a work-hardened state, which means that the elongated steel element is work hardened by means of a mechanical transformation such as wire drawing or rolling. Wire drawing is a metal working process used to reduce the cross-section of a wire by pulling the wire through a single, or series of, drawing die(s). Wire rolling is a process of reduction of the cross-section area or shaping a metal piece through the deformation caused by a pair of rotating in opposite directions metal rolls. It is known that work-hardening increases the ultimate tensile strength Rm and decreases ductility of the wire. The ductility of the wire can be reflected by the elongation at break Eb. As will be illustrated hereinafter, in comparison with traditional steel wires, the steel wire used in the invention with specific composition only needs a few reductions steps to reach comparative levels of ultimate tensile strength with the high level of elongation.

According to the present invention, the elongated steel element has additional advantage when its cross-section is non-round. The martensitic grains of the steel according to the present invention are oriented and the orientation is normally linked with the production of the elongated steel elements. The orientation of the martensitic grains or the texture of the product has consequently certain relationship with the geometry or dimension of the product. For instance, due to the specific directional compacting force, the texture of a cold rolled flat shaped wire is better compared with a drawn wire having round cross-section. Moreover, the orientation direction of the martensitic grains of a cold rolled flat shaped wire relative to the geometry of the product can be recognized from the anisotropy of the non-round cross-section.

The flexible tubular structure according to the invention may comprise one or more of the following features, considered alone or according to any technically possible combination(s):
- a fraction of at least 40 volume percent of martensitic grains is oriented in the martensitic structure.
- the at least one elongated steel element (44) has a tensile yield strength Rp_{0.2} which is at least 80 percent of the ultimate tensile strength Rm.
- the at least one elongated steel element (44) has a ultimate tensile strength Rm of at least 1200 MPa and an elongation at break Eb of at least 3 percent.
- the at least one elongated steel element (44) has a ultimate tensile strength Rm of at least 1200 MPa for cross-section area below 300 mm² and at least 1300 MPa for cross-section area below 100 mm² and at least 1400 MPa for cross-section area below 5 mm², and Rm is tunable down to 1000 MPa with a consecutive heat treatment.
- the at least one elongated steel element (44) is in a cold-rolled state.
- the at least one elongated steel element (44) is in a warm-rolled state.
- the at least one elongated steel element (44) is a flat shaped wire.
- the at least one flat shaped wire has a "blacksmith cross" visible on its cross-section.
- the flexible tubular structure is an onshore and/or offshore flexible pipe or a subsea umbilical.
- the flexible tubular structure comprises at least one tensile armor layer (34, 36), said at least one tensile armor layer (34, 36) comprising said at least one elongated steel element (44).
- the at least one tensile armor layer (34, 36) comprise tensile armor wires (35, 37) which are all identical to said at least one elongated steel element (44).
According to the present invention, a fraction of at least 20 volume percent of martensitic grains is oriented. Preferably, a fraction of at least 30 volume percent of martensitic grains is oriented. More preferably, a fraction of at least 40 volume percent of martensitic grains is oriented.

The elongated steel element preferably has a tensile yield strength Rp_{0.2} which is at least 80 percent of the ultimate tensile strength Rm. Rp_{0.2} is the tensile yield strength at 0.2% permanent elongation. More preferably, the yield to tensile ratio, i.e. Rp_{0.2}/Rm, is between 80 percent and 96 percent. Therefore, the steel wire after elastic deformation can be still deformed to certain extent before breaking. However, as will be cited further, consecutive heat treatment can result in a very high yield to tensile ratio (with Rm before the heat treatment being higher than or equal to Rm following the heat treatment) in combination with elongation at break Eb higher than 3%.

The elongated steel element preferably has a corrosion resistance coating. More preferably, the steel wire has a corrosion resistance coating selected from any one of zinc, aluminium, nickel, silver, copper, or their alloys. In such a case, the wires have a prolonged life time even in a harsh corrosive environment.

Without consecutive heat treatment, the elongated steel element can have a ultimate tensile strength Rm of at least 1200 MPa and an elongation at break Eb of at least 3 percent. The elongated steel element can be in a cold-rolled state. The elongated steel element can be a flat shaped wire and therefore has a "blacksmith cross" at cross-section. Without consecutive heat treatment, the flat shaped steel wire has a ultimate tensile strength Rm of at least 1200 MPa for cross-section area below 300 mm² and at least 1300 MPa for cross-section area below 100 mm² and at least 1400 MPa for cross- section area below 5 mm². With a consecutive heat treatment, the ultimate tensile strength Rm can be tuned, depending on time and temperature of the thermal cycle, between the Rm obtained prior to the heat treatment and down to 1000 MPa.

The elongated steel element used for manufacturing said flexible tubular structure is obtained by the following process comprising the following steps in order:
a) austenitizing a steel ingot, a steel wire rod or a steel (drawn or rolled) wire above Ac3 temperature during a period less than 120 seconds,
b) quenching said austenitized steel ingot, steel wire rod or steel wire below 100°C during a period less than 60 seconds,
c) tempering said quenched steel ingot, steel wire rod or steel wire between 320°C and 700°C during a period ranging from 10 seconds to 600 seconds,
d) work hardening said quenched and tempered steel ingot, steel wire rod or steel wire into an elongated steel element.

In the prior art, such as in the disclosure of US patent No. 5922149, the steel wire or wire rod was first deformed or work hardened to final dimension and thereafter quenched and tempered, as schematically shown in Fig. 2. In contradiction, according to the present invention, the steel ingot, steel wire rod or steel wire is first quenched to form martensitic microstructure. Tempering the quenched steel wire rod or steel wire is followed thereafter. The tempered martensitic steel is then deformed or work hardened, e.g. by drawing or rolling, into final dimension, as schematically shown in Fig. 3. The orientation of martensitic grains is a result of applied compression force via drawing or rolling on the quenched and tempered martensitic elongated steel elements. The degree of orientation mainly depends on the applied compression force and strain hardening.

Present invention receives unexpected technical results and advantages. Usually in wire processing quenching and tempering is the final step, and martensite has always been claimed as detrimental for drawing or rolling. The tensile strength of the martensitic wire according to the present invention is very high and the combination of the level of tensile strength with the high level of ductility is uncommon. The surprising result obtained by drawing or rolling the tempered martensitic steel may be attributed to the special alloying of the steel (microalloyed with Cr and Si) versus conventional eutectoid steels. The orientation of martensitic grains in the cold-deformed elongated steel element is the result of applied compression force via deformation on the quenched and tempered martensitic steel. The synergy effect of the composition and the process of the present application results in a martensitic elongated steel element having a preferred martensitic orientation.

The process may further comprise a step of e) aging said work hardened elongated steel element at a temperature between 100°C and 250°C.

Preferably, in the process said work hardening occurs at a temperature below 700°C. Said work hardening can be cold rolling. Cold deformation has an added effect of work hardening and strengthening the material, and thus further improves the material's mechanical properties. It also improves the surface finish and holds tighter tolerances allowing desirable qualities that cannot be obtained by hot deformation. Alternatively, said work hardening is a warm rolling occurring between 400°C and 700°C. For a similar reduction, the application of warm rolling significantly reduces the amount of required passes, the load on the rolls and simplifies the process.

The process may further comprise the alternative step e) annealing said work hardened elongated steel element at a temperature between 350°C and 700°C. The annealing step can remove residual stresses, increase the yield to tensile ratio and further improve the ductility of the elongated steel elements.

### Brief Description of Figures in the Drawings

The invention will be better understood with reference to the detailed description when considered in conjunction with the non-limiting examples and the accompanying drawings, in which:
- Figure 1 schematically shows grain orientation in poly-crystallographical materials ;
- Figure 2 illustrates a thermo-mechanical process for steel wires according to the prior art ;
- Figure 3 illustrates the thermo-mechanical process for steel wires according to the present invention ;
- Figure 4 illustrates a temperature versus time curve for a thermal process for manufacturing steel wires used in the present invention;
- Figure 5 shows the ultimate tensile strength / tensile yield strength, and elongation as a function of thickness reduction related to the manufacturing of the steel wires used in the present invention;
- Figure 6 is a schematic view of "blacksmith-cross" on the cross-section of flat shaped elongated steel elements produced for reinforcing the flexible tubular structure of the present invention;
- Figure 7 (a) shows the scanning electron microstructure (SEM) near the center of the "blacksmith-cross" of flat shaped steel wire;
- Figure 7 (b) shows the scanning electron microstructure at the short edge of the cross-section of the flat shaped steel wire;
- Figure 7 (c) shows the scanning electron microstructure at the long edge of the cross-section of the flat shaped steel wire;
- Figure 8 is a schematic view of the cross-section of a wire rod after a same thermal treatment according to the present invention;
- Figure 9 (a) shows the scanning electron microstructure near the center of the wire rod;
- Figure 9 (b) shows the scanning electron microstructure at the edge of the wire rod;
- Figure 10 shows the development of ultimate tensile strength / tensile yield strength, and elongation of the steel wire according to the present invention as a function of annealing temperature;
- Figure 11 is a stripped-down perspective view of the flexible tubular structure according to the present invention.

### Mode(s) for Carrying Out the Invention

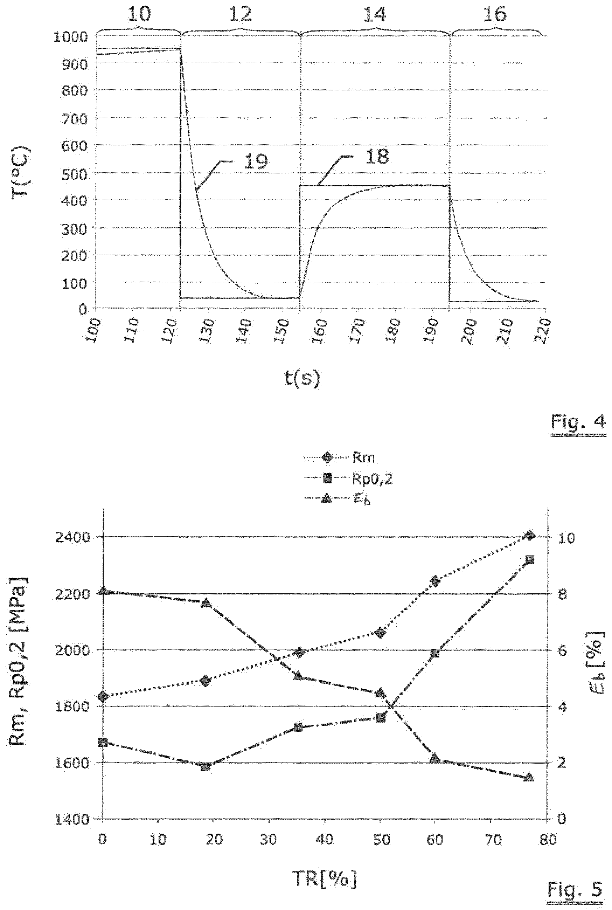

Figure 4 illustrates a suitable temperature versus time curve applied to a steel wire or wire rod with a diameter of 6.5 mm and with following steel composition:
- % wt C =0.55
- % wt Mn =0.65
- % wt Si =1.4
- % wt Cr = 0.6
the balance being iron and unavoidable impurities.

The starting temperature of martensite transformation Ms of this steel is about 280°C and the temperature Mf, at which martensite formation ends is about 100°C.

The various steps of the process are as follows:
- a first austenitizing step (10) during which the steel wire stays in a furnace at about 950 °C during 120 seconds ;
- a second quenching step (12) for martensite transformation in oil at a temperature below 100 °C during at least 20 seconds;
- a third tempering step (14) for increase the toughness at a temperature about 450 °C during less than 60 seconds; and,
- a fourth cooling step (16) at room temperature during 20 or more seconds.

Curve 18 is the temperature curve in the various equipment parts (furnace, bath...) and curve 19 is the temperature of the steel wire or wire rod.

The steel wire or wire rod after above thermal treatment has a tempered martensitic microstructure, similar to steel wire structure disclosed above in the US patent No.5922149.

The formed martensitic steel wire or wire rod is continued with cold rolling, i.e. below 400°C, to flat shape. The steel element is cold rolled to final dimension through several rolling stands. The more rolling stands the steel wire pass, the more thickness reduction. The tension of the steel wire may be measured and controlled. It is important to minimize or eliminate the tension in the steel wire moving between stands. Tension can result in a substantial narrowing of the steel. A precision speed regulation system can be used to control the speed at which the rollers are driven to minimize tension. As an example, an edge rolling is inserted between two thicknesses rolling.

The tensile yield strength Rp_{0.2} and ultimate tensile strength Rm at different level of thickness reduction TR together with the elongation at break Eb are shown in Fig. 5. As shown in Fig. 5, both ultimate tensile strength Rm and tensile yield strength Rp_{0.2} increase with the thickness reduction TR. The yield to tensile ratio is between 80 and 96. Having a thickness reduction TR of 60%, the ultimate tensile strength Rm of the flat shaped steel wire can go up to 2200 MPa without failure or breaking. Such a flat shaped steel wire has an elongation at break Eb about 2%, which is acceptable for further manufacturing operations such as armoring process of said flat shaped steel wire on the tubular structure and/or bending the flexible tubular structure on a reel for the storage and also during production operation in service.
Surprisingly, applying a work hardening operation on the steel wire increases greatly the mechanical properties such as the ultimate tensile strength Rm which is increased e.g. from about 1000 MPa up to 2200 MPa and the elongation at break Eb which is diminished from around 8% to less than about 2%.

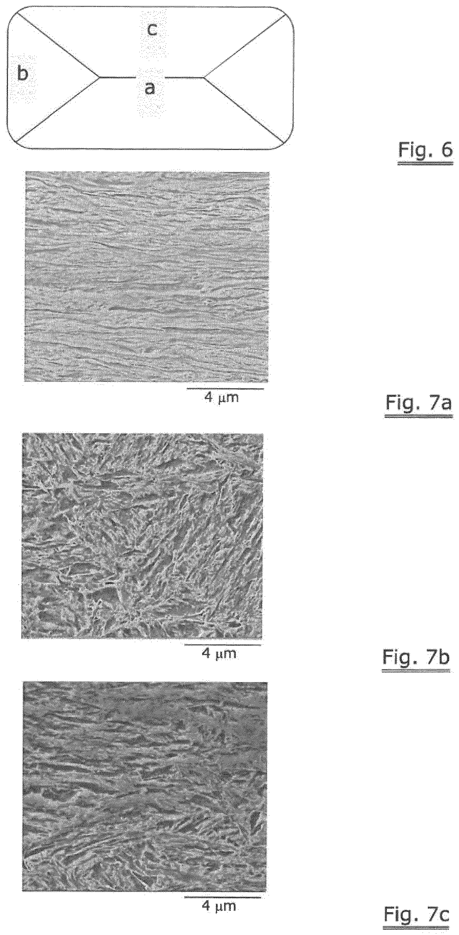

This very high tensile strength is a consequence of oriented martensitic grains in the steel wire after rolling. The orientation was analyzed by image analysis and it appears a fraction of at least 10 volume percent of martensitic grains is oriented. In particular, the martensitic grains are well oriented near the so called "blacksmith cross" (as shown in Fig. 6) characterized by a maximal strain area created due to rolling. In some instance, it is also called "lamination cross" since it is a formation of macroscopic shear bands. In terms of stresses, rolling has a heterogeneous repartition of stress components between the center, the long edge and the short edge of the flat shaped wire. The highest strains or strongest deformation takes place at a cross area as schematically shown in Fig. 6. The strain distribution determines the orientation of lenticular shaped martensitic grains such that the martensites are much better compressed and consequently oriented near this cross area (e.g. position indicated by (a) in Fig. 6) in comparison with the orientation near the short and long edges (positions indicated respectively by (b) and (c) in the cross-section view of Fig. 6). Figure 7(a) and figure 7(b)&(c) shows respectively the microstructures of the cross-section near the center (indicated by (a) in Fig. 6) and near the short and long edges of the flat shaped wire (indicated respectively by (b) and (c) in Fig. 6) cold-rolled to11.9 mm in wide and 3.5 mm in thickness. As shown in Fig. 7(a), the lenticular shaped martensitic grains appear needlelike shape microstructure and are well oriented. It has been found in particular near the center of the cross-section the axes of lenticular (lens-shaped) martensitic crystal grains are oriented substantially normal to the long edge of the flat shaped wire. The degree of orientation of martensitic grains at the edges as shown in Fig. 7(b) &(c) are not as high as that shown in Fig. 7(a) which is near the center.

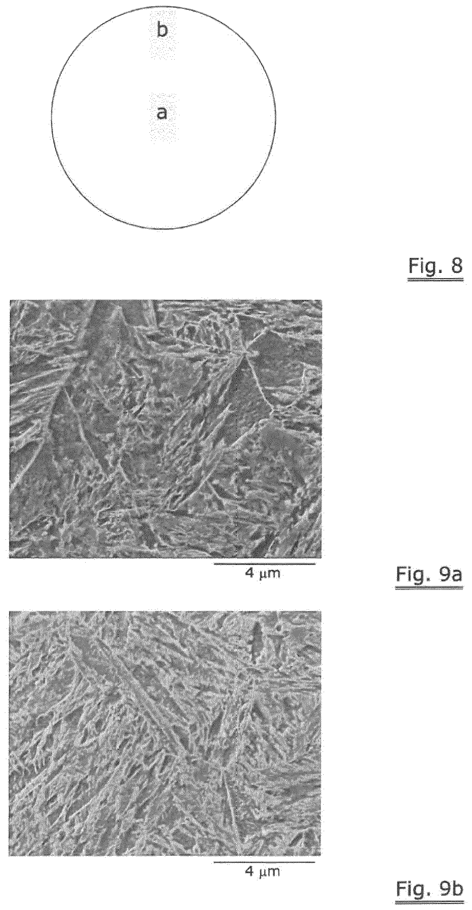

As a comparison, the microstructure at the edge (indicated by position (b) in Fig. 8) and near the center (indicated by position (a) in Fig. 8) of a wire rod with a round cross-section (Fig. 8) is also observed and shown in Fig. 9. The wire rod went through a same thermal treatment as the flat shaped wire used for forming at least one metallic reinforcing layer of the flexible tubular structure of the invention, and there is no cold deformation applied to this wire rod during or after the thermal treatment. Without cold deformation, the wire rod appears a homogeneous microstructure. The martensitic grains are randomly oriented either near the center (Fig. 9(a)) or at the edge (Fig. 9(b)) of the wire rod.

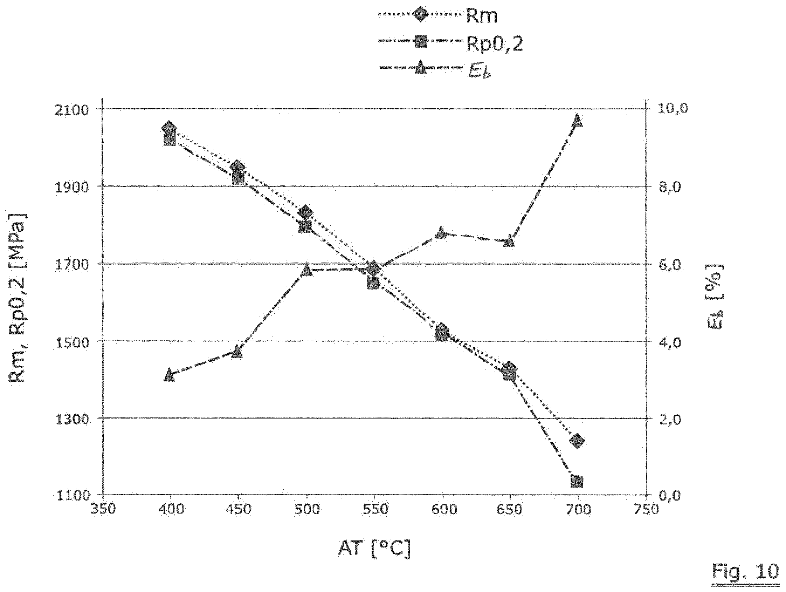

As an additional and optional step, an annealing treatment may be used after rolling to remove stresses. The initial cold-rolled flat shaped wire has a ultimate tensile strength of about 2020 MPa, a tensile yield strength of about 1750 MPa and an elongation at break of about 4.2%. The work hardened steel wires continuously pass at a speed of 15 m/min through an annealing furnace or oven at a temperature between 350°C and 750°C. The development of ultimate tensile strength Rm, tensile yield strength Rp_{0.2} and elongation at break At of the steel wire as a function of the annealing temperature AT are shown in Fig. 10. When the wire was annealed at low temperature, i.e. about 400°C or 450°C, the elongation was not improved and even slightly decreased. However, when annealed at a temperature above 500°C, the elongation at break Eb of work hardened steel wire increases with annealing temperature AT as shown in Fig. 10. When the steel wire was annealed at 700°C, the elongation at break Eb of steel wire can go up to about 9.5%. Both the ultimate tensile strength Rm and the tensile yield strength Rp_{0.2} decrease with the annealing temperature of the steel wire.

According to a first preferred embodiment, the work hardened steel wire is annealed so as to reduce its ultimate tensile strength Rm from about 2020 MPa to a value comprised between 1000 MPa and 1500 MPa, preferably comprised between 1200 MPa and 1500 MPa.

The embodiment provides an elongated steel element of strong mechanical resistance which is also very resistant to hydrogen embrittlement. The resistance to the acidic fluids is higher than what was obtained with the prior art solutions, and surprisingly higher than what could be expected with low alloyed carbon steels.

The reason for this technical effect seems to be related both to the orientation of the martensitic grains and to the annealing treatment which softens the cold worked steel without significantly affecting the orientation of the grains.

Tests have been carried out showing that steel wires comprising a large amount of oriented martensitic grains aligned along the longitudinal axis of the wire have a better resistance to SSC (Sulfide Stress Cracking) and SCC (Stress Corrosion Cracking) than similar wires of same composition and same mechanical properties wherein the martensitic grains are not oriented. Other tests have also shown that the wires according to the present invention have a very good resistance to HIC (Hydrogen Induced Corrosion).

Adding a cold deformation after the quenching and tempering steps leads to the orientation of the martensite grains along the longitudinal axis of the wire, which increases the resistance to SSC and SCC by preventing or limiting the propagation of transverse cracks when the a tensile load is applied to the wire.

It should be noted that the martensitic grains of the steels disclosed in the US patent n° 5922149 are not oriented because there is not cold working step after the tempering treatment.

Flexible tubular structures comprising reinforcing steel wires produced according to this first preferred embodiment can advantageously be used for deepwater (DW) applications for transporting highly corrosive hydrocarbons.

According to a second preferred embodiment, the work hardened steel wire is annealed so as to reduce its ultimate tensile strength Rm from about 2020 MPa to a value comprised between 1500 MPa and 1900 MPa, preferably comprised between 1600 MPa and 1800 MPa.

The corrosion resistance to such wires is lower than the one of the first preferred embodiment, but can be sufficient in presence of very small amount of H₂S. It has been observed that such wires can maintain a surprisingly high SCC resistance in pure CO₂ conditions.

Furthermore, such steels have shown to be ductile enough to withstand large plastic deformation as required during the manufacturing of the flexible tubular structure. Their elongation at break Eb is indeed typically larger than around 5%.

Flexible tubular structures comprising reinforcing steel wires produced according to this second preferred embodiment can advantageously be used for ultra deepwater (UDW) applications requiring reinforcing wires of very high mechanical strength.

Alternatively, warm rolling is used to flatten or reduce the thickness of the steel wire. The quenched and tempered round or flat wire is first warmed up to a temperature between 400°C and 700°C in a furnace or oven before the warm rolling, preferably in a median frequency induction heating furnace. Here, median frequency means a frequency in the range of 10 to 200 kHz. Preferably, a trimming unit is used during warm rolling that adjusts the temperature of the steel to compensate for heat loss that may occur during the rolling step.

From now on, the flexible tubular structure, object of the present invention will be disclosed in details.

In the following, the terms "external" or "externally" and "internal" or "internally" must be understanding radially to an axis A-A' of the flexible tubular structure, the term "external" means the most radially outward from the axis A-A' and the term "internal" means the most radially inward from the axis A-A' of the tubular structure.

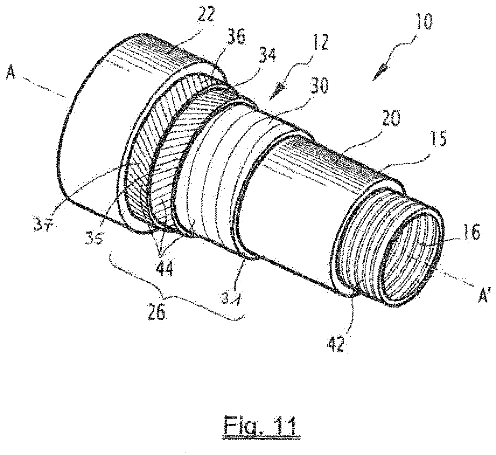

A flexible tubular structure is illustrated in Figure 11. The flexible tubular structure 10 comprises a central section 12 partially depicted in Figure 11.

In reference to Figure 11, the tubular structure 10 defines in its internal volume 15, a central fluid flow path 16, advantageously of an oil fluid. The central flow path 16 extends along an axis A-A'. The diameter of the central flow path 16 is advantageously comprised between 50 mm (2") and 500 mm (20").

The fluid conveyed by the tubular structure is e.g. a gas or a liquid extracted from the seabed bearing.

The flexible tubular structure 10 is intended to be installed in water (not represented) and connected to a fluid production facility, especially of hydrocarbons type. Water means e.g. a sea, a lake or an ocean. The water depth perpendicular to the fluid production facility is e.g. comprised between 50 m and 4000 m.

The fluid production facility comprises a surface assembly, usually consisting in a floating assembly, and a subsea assembly. Both are generally connected with a flexible tubular structure 10. According to the present invention, the flexible tubular structure 10 is an unbonded pipe, i.e. at least two adjacent layers are free to move lengthwise the one compared to the other when the pipe is bending.

Advantageously, all the adjacent layers are free to move the ones compared to the others. Such kind of pipe is e.g. disclosed in the normative documents published by the American Petroleum Institute (API), API 17J and API RP 17B.

As illustrated in Figure 11, the flexible tubular structure or pipe 10 defines a plurality of concentric layers around the axis A-A', extending continuously along the central section 12 of said pipe 10.

Generally, unbonded flexible tubular structure generally comprises a first internal polymeric layer or pressure sheath, a pressure vault, at least one tensile armor layer and an external polymeric layer or external protective sheath.

The pressure vault and the tensile armor layers are considered as the reinforcing layers of the flexible tubular structure.

The tubular structure 10 comprises at least a first sheath or internal barrier layer 20 made of a polymeric material constituting a pressure sheath. Tubular structure 10 comprises a second sheath or external layer 22 intended to protect the structure 10.

Internal barrier layer 20 and external layer 22 define an annular space or annulus 26 which comprises the metallic reinforcing layers 30; 34, 36 of the pipe 10. The annulus 26 is a particular deaerated medium with a high confinement (Volume / Surface ratio' is very low) and which may contain water, chlorides, CO₂ (carbon dioxide) and H₂S (hydrogen sulphide) with pH values typically comprised between 5 and 7.

Besides, the tubular structure 10 advantageously comprises an internal metallic carcass 42 located inside the barrier layer 20.

Said profiled strip forming the carcass 42 is helically wound with a short pitch, the helix angle being typically comprised between 75° and 90°.

In this embodiment, said carcass 42 is located inside the barrier layer 20. Tubular structure 10 is then designated by the term "rough bore" owing to the carcass 42 geometry.

When the pipe 10 does not comprise an internal metallic carcass 42, it is designated by the term "smooth bore".

As it is well known, the barrier layer 20 has watertight properties. The fluid conveyed within the passage 16 is then confined. The layer 20 is made of an extruded polymeric material e.g. from a polyolefin such as a polyethylene, from a polyamide such as a PA11 or a PA12, or from a fluorinated polymer such as a polyvinylidene fluoride (PVDF). The thickness of barrier layer 20 is e.g. comprised between 5 mm and 20 mm. According to the present invention, the pressure resistant layer or pressure vault 30 is intended to withstand radial pressure stresses exerted by the fluid conveyed within the passage 16. Said pressure vault 30 comprises according to the present invention at least one pressure vault steel wire 31 which is helically wound with a short pitch around the barrier layer 20, the helix angle being typically comprised between 75° and 90°.

In Figure 11 and according to the present invention, the flexible tubular structure 10 comprises one pair of tensile armor layers 34, 36.

In other embodiment not represented, the tubular structure 10 could comprise several pairs of tensile armor layers, for example two pairs of tensile armor layers.

The pair of tensile armor layers 34, 36 comprises an internal armor layer 34 applied on the pressure vault 30 and an external armor layer 36 applied on the internal armor layer 34.

The tensile armor layers 34, 36 both comprise a plurality of armor steel wires 35, 37 which are wound with a long pitch, the helix angle being typically comprised between 20° and 60°, preferably comprised between 25° and 55°. The internal tensile armor layer 34 and the external tensile armor layer 36 are preferably cross wound.

In the present application, the metallic reinforcing layers of the flexible tubular structure 10 are defined to be the metallic layers located outside the polymeric internal barrier layer 20. In the embodiment shown by the Figure 11, the metallic reinforcing layers are thus the pressure vault 30 and the tensile armor layers 34, 36.

The metallic reinforcing layers 30; 34, 36 all comprise at least one steel wire 31; 35, 37 helically wound around the axis A-A' of the flexible tubular structure 10.

According to the present invention, the metallic reinforcing layers 30; 34, 36 comprise at least one steel elongated element 44, said at least one steel elongated element 44 being defined as a steel wire which has a non-round cross section and has as steel composition:
- a polymeric internal barrier layer;
- at least one metallic reinforcing layer comprising a plurality of elongated steel element having a non-round cross-section and having as steel composition:
   a carbon content ranging from 0.20 weight percent to 1.00 weight percent, e.g. from 0.50 weight percent to 0.75 weight percent, or about 0.60 weight percent,
   a silicon content ranging from 0.05 weight percent to 2.0 weight percent, e.g. from 0.15 weight percent to 1.8 weight percent, or about 0.20 weight percent, or about 1.40 weight percent,
   a manganese content ranging from 0.40 weight percent to 1.0 weight percent, e.g. from 0.50 weight percent to 0.80 weight percent, or about 0.6 weight percent,
   a chromium content ranging from 0.0 weight percent to 1.0 weight percent, e.g. from 0.00 weight percent to 0.10 weight percent, or from 0.10 weight percent to 0.90 weight percent, or from 0.50 weight percent to 0.80 weight percent,
   a sulfur and phosphor content being individually limited to 0.025 weight percent, e.g. limited to 0.015 weight percent,
   contents of nickel, vanadium, aluminum all being individually limited to 0.50 weight percent, e.g. limited to 0.30 weight percent or limited to 0.10 weight percent,
   the remainder being iron, said steel having martensitic structure that comprises martensitic grains, wherein a fraction of at least 20 volume percent of martensitic grains is oriented.

With such fraction of oriented martensitic grains in the structure, the flexible tubular structure 10 of the present invention has a better resistance to sour environment condition, i.e. to SCC and SSC and better mechanical resistance properties than flexible tubular structure of the prior art. Consequently, its service life is improved.

Preferably, all the armor steel wires 35, 37 of the tensile armor layers 34, 36 are all identical to said at least one steel elongated element 44.

In addition, optionally, all the pressure vault armor wires 31 of the pressure vault 30 have the same composition and microstructure as those of said at least one steel elongated element 44, and have also a non-round cross section. In this embodiment, the cross section of the pressure vault armor wires 31 is preferably different from the cross section of the tensile armor wires 35, 37, although all of them are non-round.

In a variation not represented, the flexible tubular pipe 10 is an Integrated Production Bundle or IPB. The IPB comprises a core which is similar to the flexible pipe represented in Figure 11, said core being surrounded by a bundle of hoses and/or electrical cables and/or optical cables and/or fillers arranged the layer 22, and over sheathed by an external polymer sheath.

## Claims

1. An unbonded flexible tubular structure (10) for oil exploitation comprising:
- a polymeric internal barrier layer (20);
- at least one metallic reinforcing layer (30; 34, 36) located outside the polymeric internal barrier layer (20), said metallic reinforcing layer (30; 34, 36) comprising a pressure vault (30) comprising at least one pressure vault steel wire (31) which is helically wound with a short pitch around the barrier layer (20) and a pair of tensile armor layers (34, 36) both comprising a plurality of armor steel wires (35, 37) wound with a long pitch, comprising an internal armor layer (34) applied on the pressure vault (30) and an external armor layer (36) applied on the internal armor layer (34), said metallic reinforcing layer (30; 34, 36) comprising at least one elongated steel element (44) having a non-round cross-section and having as steel composition:
- a carbon content ranging from 0.20 weight percent to 1.00 weight percent, a silicon content ranging from 0.05 weight percent to 2.0 weight percent, a manganese content ranging from 0.40 weight percent to 1.0 weight percent,
- a chromium content ranging from 0.0 weight percent to 1.0 weight percent, a sulfur and phosphor content being individually limited to 0.025 weight percent,
- contents of nickel, vanadium, aluminium all being individually limited to 0.5 weight percent,
- the remainder being iron;
said steel having martensitic structure that comprises martensitic grains, wherein a fraction of at least 20 volume percent of martensitic grains is oriented; oriented means that the lenticular grains are either crystallographically oriented and/or microstructurally oriented, wherein the crystallographic axis or the axis of lenticular grains are oriented at the same direction within a tolerance of 20° as measured by X-Ray Diffraction analysis or Electron Backscatter Diffraction or by image analysis such as scanning electron microscope.

2. An unbonded flexible tubular structure (10) according to claim 1, wherein a fraction of at least 40 volume percent of martensitic grains is oriented in the martensitic structure.

3. An unbonded flexible tubular structure (10) according to any of the preceding claims, wherein the at least one elongated steel element (44) has a tensile yield strength Rp_{0.2} which is at least 80 percent of the ultimate tensile strength Rm.

4. An unbonded flexible tubular structure (10) according to any one of the preceding claims, wherein the at least one elongated steel element (44) has a ultimate tensile strength Rm of at least 1200 MPa and an elongation at break Eb of at least 3 percent.

5. An unbonded flexible tubular structure (10) according to any one of the preceding claims, wherein the at least one elongated steel element (44) has a ultimate tensile strength Rm of at least 1200 MPa for cross-section area below 300 mm² and at least 1300 MPa for cross-section area below 100 mm² and at least 1400 MPa for cross-section area below 5 mm², and wherein Rm is tunable down to 1000 MPa with a consecutive heat treatment.

6. An unbonded flexible tubular structure (10) according to any one of the preceding claims, wherein the at least one elongated steel element (44) is in a cold-rolled state.

7. An unbonded flexible tubular structure (10) according to any one of claims 1 to 5, wherein the at least one elongated steel element (44) is in a warm-rolled state.

8. An unbonded flexible tubular structure (10) according to any one of the preceding claims, wherein the at least one elongated steel element (44) is a flat shaped wire.

9. An unbonded flexible tubular structure (10) according to claim 8, wherein the at least one flat shaped wire has a "blacksmith cross" visible on its cross-section.

10. An unbonded flexible tubular structure (10) according to any one of claims 1 to 9, wherein said flexible tubular structure is an onshore and/or offshore flexible pipe or a subsea umbilical.

11. An unbonded flexible tubular structure (10) according to any one of the preceding claims 1 to 10, wherein said flexible tubular structure comprises at least one tensile armor layer (34, 36), said at least one tensile armor layer (34, 36) comprising said at least one elongated steel element (44).

12. An unbonded flexible tubular structure (10) according to the claim 11, wherein said at least one tensile armor layer (34, 36) comprise tensile armor wires (35, 37) which are all identical to said at least one elongated steel element (44).

## Patentansprüche

1. Eine ungebundene flexible röhrenförmige Struktur (10) für die Ölausbeutung, umfassend:
- eine polymere innere Sperrschicht (20);
- mindestens eine metallische Verstärkungsschicht (30; 34, 36), die sich außerhalb der polymeren inneren Sperrschicht (20) befindet, wobei die metallische Verstärkungsschicht (30; 34, 36) eine Druckkammer (30) mit mindestens einem Druckkammerstahldraht (31), welcher helikal mit kurzer Ganghöhe um die Sperrschicht (20) gewickelt ist, und mit einem Paar zugbelastbarer Armierungsschichten (34, 36), welche beide eine Vielzahl von Armierungsstahldrähten (35, 37) aufweisen, die mit langer Ganghäge gewickelt sind, umfassend eine innere Armierungsschicht (34), welche auf der Druckkammer (30) angeordnet ist, und eine externe Armierungsschicht (36), welcher auf der inneren Armierungsschicht (34) angeordnet ist, wobei die besagte metallische Verstärkungsschicht (30; 34; 36) zumindest ein langgestrecktes Stahlelement (44) mit einem nicht-runden Querschnitt und mit folgender Stahlzusammensetzung aufweist:
- einen Kohlenstoffgehalt im Bereich von 0,20 Gew.-% bis 1,00 Gew.-%, einen Siliciumgehalt im Bereich von 0,05 Gew.-% bis 2,0 Gew.-%, einen Mangangehalt im Bereich von 0,40 Gew.-% bis 1,0 Gew.-%,
- einen Chromgehalt im Bereich von 0,0 Gew.-% bis 1,0 Gew.-%, wobei der Schwefel- und Phosphorgehalt individuell auf 0,025 Gew.-% begrenzt ist,
- Gehalte an Nickel, Vanadium, Aluminium, die alle einzeln auf 0,5 Gew.-% begrenzt sind,
- der Rest Eisen;
wobei der Stahl eine martensitische Struktur aufweist, die martensitische Körner umfasst, wobei ein Anteil von mindestens 20 Vol.-% der martensitischen Körner orientiert ist, was bedeutet, dass die linsenförmigen Körner entweder kristallographisch und/oder mikrostrukturiert orientiert sind, wobei die kristallographische Achse oder die Achse der linsenförmigen Körner entlang der selben Richtung innerhalb eines Toleranzbereichs von 20° wie durch eine Röntgenbeugungsanalyse oder eine eine Elektronenrückstreubrechung oder eine Bildanalyse wie etwa Rasterelektronenmikroskopie gemessen.

2. Ungebundene flexible röhrenförmige Struktur (10) nach Anspruch 1, wobei ein Anteil von mindestens 40 Vol.-% martensitischer Körner in der martensitischen Struktur orientiert ist.

3. Ungebundene flexible röhrenförmige Struktur (10) nach einem der vorstehenden Ansprüche, wobei das mindestens eine langgestreckte Stahlelement (44) eine Zugstreckgrenze Rp_{0,2} aufweist, die mindestens 80 Prozent der Zugfestigkeitsgrenze Rm beträgt.

4. Ungebundene flexible röhrenförmige Struktur (10) nach einem der vorstehenden Ansprüche, wobei das mindestens eine langgestreckte Stahlelement (44) eine Zugfestigkeitsgrenze Rm von mindestens 1.200 MPa und eine Bruchdehnung Eb von mindestens 3 Prozent aufweist.

5. Ungebundene flexible röhrenförmige Struktur (10) nach einem der vorstehenden Ansprüche, wobei das mindestens eine langgestreckte Stahlelement (44) eine Zugfestigkeitsgrenze Rm von mindestens 1.200 MPa für eine Querschnittsfläche unter 300 mm² und mindestens 1.300 MPa für eine Querschnittsfläche unter 100 mm² und mindestens 1.400 MPa für eine Querschnittsfläche unter 5 mm² aufweist und wobei Rm durch eine nachfolgende Wärmebehandlung auf 1.000 MPa absenkbar ist.

6. Ungebundene flexible röhrenförmige Struktur (10) nach einem der vorstehenden Ansprüche, wobei sich das mindestens eine langgestreckte Stahlelement (44) in einem kaltgewalzten Zustand befindet.

7. Ungebundene flexible röhrenförmige Struktur (10) nach einem der Ansprüche 1 bis 5, wobei sich das mindestens eine langgestreckte Stahlelement (44) in einem warmgewalzten Zustand befindet.

8. Ungebundene flexible röhrenförmige Struktur (10) nach einem der vorhergehenden Ansprüche, wobei das mindestens eine langgestreckte Stahlelement (44) ein flachgeformter Draht ist.

9. Ungebundene flexible röhrenförmige Struktur (10) nach Anspruch 8, wobei der mindestens eine flach geformte Draht ein "Schmiedekreuz" aufweist, das auf seinem Querschnitt sichtbar ist.

10. Ungebundene flexible röhrenförmige Struktur (10) nach einem der Ansprüche 1 bis 9, wobei die flexible röhrenförmige Struktur ein flexibles Onshore- und/oder Offshore-Rohr oder eine Unterwasser-Versorgungsleitung ist.

11. Ungebundene flexible röhrenförmige Struktur (10) nach einem der Ansprüche 1 bis 10, wobei die flexible röhrenförmige Struktur mindestens eine zugbelastbare Armierungsschicht (34, 36) umfasst, wobei die mindestens eine zugbelastbare Armierungsschicht (34, 36) das mindestens eine langgestreckte Stahlelement (44) umfasst.

12. Ungebundene flexible röhrenförmige Struktur (10) nach Anspruch 11, wobei die mindestens eine zugbelastbare Armierungsschicht (34, 36) Zugarmierungsdrähte (35, 37) umfasst, die alle identisch mit dem mindestens einen langgestreckten Stahlelement (44) sind.

## Revendications

1. Structure tubulaire flexible non soudée (10) destinée à l'exploitation pétrolière comprenant :
une couche de barrière interne en polymère (20) ;
au moins une couche de renforcement métallique (30 ; 34, 36) située hors de la couche de barrière interne en polymère (20), ladite couche de renforcement métallique (30 ; 34, 36) comprenant un élément résistant à la pression (30) comportant au moins un fil d'acier d'élément résistant à la pression (31) qui est enroulé de manière hélicoïdale avec un pas court autour de la couche de barrière (20) et une paire de couches d'armature de traction (34, 36) toutes deux comprenant une pluralité de fils d'acier d'armature (35, 37) enroulés avec un pas long,
comprenant une couche d'armature interne (34) appliquée sur l'élément résistant à la pression (30) et une couche d'armature externe (36) appliquée sur la couche d'armature interne (34), ladite couche de renforcement métallique (30 ; 34, 36) comprenant au moins un élément d'acier (44) allongé présentant une section transversale non ronde et dont la composition d'acier présente :
une teneur en carbone de 0,20 pour-cent en poids à 1,00 pour-cent en poids, une teneur en silicium de 0,05 pour-cent en poids à 2,0 pour-cent en poids, une teneur en manganèse de 0,40 pour-cent en poids à 1,0 pour-cent en poids,
une teneur en chrome de 0,0 pour-cent en poids à 1,0 pour-cent en poids, une teneur en soufre et en phosphore qui est limitée individuellement à 0,025 pour-cent en poids,
des teneurs en nickel, vanadium, aluminium étant toutes limitées individuellement à 0,5 pour-cent en poids,
le complément étant du fer ;
ledit acier présentant une structure martensitique qui comporte les grains martensitiques, dans laquelle une fraction d'au moins 20 volumes pour-cent de grains martensitiques est orientée ; orientée signifie que les grains lenticulaires sont orientés de manière cristallographique et/ou orientés de manière microstructurelle, dans laquelle l'axe cristallographique ou l'axe des grains lenticulaires est orienté dans la même direction avec une tolérance de 20° comme mesuré par analyse par diffraction de rayon X ou diffraction d'électrons rétrodiffusés ou par analyse d'image comme par microscope électronique à balayage.

2. Structure tubulaire flexible non soudée (10) selon la revendication 1, dans laquelle une fraction d'au moins 40 volumes de grains martensitique pour-cent est orientée dans la structure martensitique.

3. Structure tubulaire flexible non soudée (10) selon l'une quelconque des revendications précédentes, dans laquelle le au moins un élément en acier allongé (44) présente une résistance limite élastique en traction Rp_{0,2} qui est supérieure ou égale à 80 pour-cent de la résistance à la rupture en traction Rm.

4. Structure tubulaire flexible non soudée (10) selon l'une quelconque des revendications précédentes, dans laquelle le au moins un élément en acier allongé (44) présente une résistance à la rupture en traction Rm supérieure ou égale à 1200 MPa et un allongement à la rupture Eb supérieur ou égal à 3 pour-cent.

5. Structure tubulaire flexible non soudée (10) selon l'une quelconque des revendications précédentes, dans laquelle le au moins un élément en acier allongé (44) présente une résistance à la rupture en traction Rm supérieure ou égale à 1200 MPa pour une section transversale inférieure à 300 mm² et supérieure ou égale à 1300 MPa pour une section transversale inférieure à 100 mm² et supérieure ou égale à 1400 MPa pour une section transversale inférieure à 5 mm², et dans laquelle la résistance Rm peut être ajustée à 1000 MPa avec un traitement thermique consécutif.

6. Structure tubulaire flexible non soudée (10) selon l'une quelconque des revendications précédentes, dans laquelle le au moins un élément en acier allongé (44) est dans un état laminé à froid.

7. Structure tubulaire flexible non soudée (10) selon l'une quelconque des revendications 1 à 5, dans laquelle le au moins un élément en acier allongé (44) est dans un état laminé à chaud.

8. Structure tubulaire flexible non soudée (10) selon l'une quelconque des revendications précédentes, dans laquelle le au moins un élément en acier allongé (44) est un fil de forme plate.

9. Structure tubulaire flexible non soudée (10) selon la revendication 8, dans laquelle le au moins un fil de forme plate comporte une "croix de forgeron" visible sur sa section transversale.

10. Structure tubulaire flexible non soudée (10) selon l'une quelconque des revendications 1 à 9, dans laquelle ladite structure tubulaire flexible est une tuyauterie flexible terrestre et/ou marine ou une conduite sous-marine.

11. Structure tubulaire flexible non soudée (10) selon l'une quelconque des revendications précédentes 1 à 10, dans laquelle ladite structure tubulaire flexible comprend au moins une couche d'armature de traction (34, 36), ladite au moins une couche d'armature de traction (34, 36) comprenant ledit au moins un élément en acier allongé (44).

12. Structure tubulaire flexible non soudée (10) selon la revendication 11, dans laquelle ladite au moins une couche d'armature de traction (34, 36) comprend des fils d'armature de traction (35, 37) qui sont tous identiques audit au moins un élément en acier allongé (44).
